# EUROPÄISCHE PATENTANMELDUNG

(11) **EP 4 717 071 A1**
(43) Veröffentlichungstag der Anmeldung: **01.04.2026**
(21) Anmeldenummer: 25193663.9
(22) Anmeldetag: 04.08.2025
(51) Int. Cl.: A01D 41/14, A01D 41/16

(54) **SELBSTFAHRENDE ERNTEMASCHINE**

(30) Priorität: 25.09.2024 DE 102024127718
(71) Anmelder: CLAAS Selbstfahrende Erntemaschinen GmbH, 33428 Harsewinkel (DE)
(72) Erfinder: MUTZKE, Erik, 33330 Gütersloh (DE)
(74) Vertreter: CLAAS Gruppe

(57) **Zusammenfassung**

Die Erfindung betrifft eine selbstfahrende Erntemaschine, vorzugsweise einen Mähdrescher (1), mit einem Maschinengehäuse (2) und einem schwenkbeweglich an dem Maschinengehäuse (2) angeordneten Schrägförderer (5), wobei an dem Schrägförderer (5) eine Multikupplungsvorrichtung (24) angeordnet ist, wobei die Multikupplungsvorrichtung (24) ein ortsfest an dem Schrägförderer (5) angeordnetes Kupplungsteil (25) umfasst, wobei eine Anschlussseite (26) des Kupplungsteils (25) zur Seite und schräg nach vorne ausgerichtet ist.

## Beschreibung

Die Erfindung betrifft eine selbstfahrende Erntemaschine mit einer Multikupplungsvorrichtung gemäß dem Oberbegriff des Anspruchs 1.

Eine Multikupplungsvorrichtung ist zum gleichzeitigen Anschluss mehrerer Schnellschlusskupplungen, wie sie insbesondere für den Anschluss von hydraulisch betriebenen Anbaugeräten an landwirtschaftlichen Arbeitsmaschinen verwendet werden, bestimmt, um durch den gleichzeitigen Anschluss von Druckmittelleitungen und elektrischen Anschlussverbindungen die Kupplungszeit zu verringern und die Möglichkeit eines Vertauschens oder Verwechselns der jeweiligen Verbindung der verschiedenen Schnellschlusskupplungen und Steckerteile zu vermeiden.

Erntemaschinen der vorstehend beschriebenen Art sind im Stand der Technik bereits bekannt. Hierzu wird beispielhaft auf die DE 106 39 217 A1 hingewiesen. Dort ist eine Multikupplungsvorrichtung für eine selbstfahrende Erntemaschine offenbart, wobei die Multikupplungsvorrichtung einen ersten Kupplungsteil und einen mit dem ersten Kupplungsteil verbindbaren zweiten Kupplungsteil aufweist. Das erste Kupplungsteile bildet das Losteil der Multikupplungsvorrichtung und ist frei beweglich mittels der zu verbindenden Leitungen an der Erntemaschine gehaltert. Das zweite Kupplungsteil bildet das Festteil der Multikupplungsvorrichtung aus und ist ortsfest an einem an dem Schrägförderer der Erntemaschine anordenbaren Vorsatzgerät angeordnet. Zum Verbinden der Kupplungsteile wird das Losteil hin zu dem Festteil geführt und dort über einen Verschließmechanismus mit dem Festteil arretiert.

Im Stand der Technik hat es sich als nachteilig herausgestellt, dass das lose mittels der Leitungen an der Erntemaschine aufgehängte erste Kupplungsteil mit entsprechend langen Leitungen ausgestattet sein muss, um die sich zwischen den Vorsatztypen unterscheidenden Positionen des Festteils erreichen zu können. Insbesondere bei Vorsatzgeräten mit nahe an dem Schrägförderer befindlichen zweiten Kupplungsteilen kann es durch die lang ausgelegten Leitungen zu Reibung mit Maschinenteilen kommen, wobei unerwünschter Verschleiß der Leitungen auftritt.

Es ist deshalb Aufgabe der Erfindung, die beschriebenen Nachteile des Standes der Technik zu vermeiden und insbesondere eine verbesserte Anordnung einer Multikupplungsvorrichtung zu schaffen.

Diese Aufgabe wird erfindungsgemäß durch die kennzeichnenden Merkmale des Anspruchs 1 gelöst. Vorteilhafte Weiterbildungen sind Gegenstand der abhängigen Ansprüche.

Gemäß dem Anspruch 1 wird eine selbstfahrende Erntemaschine, vorzugsweise ein Mähdrescher vorgeschlagen, mit einem Maschinengehäuse und einem schwenkbeweglich an dem Maschinengehäuse angeordneten Schrägförderer, wobei an dem Schrägförderer eine Multikupplungsvorrichtung angeordnet ist, wobei die Multikupplungsvorrichtung ein ortsfest an dem Schrägförderer angeordnetes Kupplungsteil umfasst, wobei eine Anschlussseite des Kupplungsteils zur Seite und schräg nach vorne ausgerichtet ist.

Die Anschlussseite ist dementsprechend schräg zur Längsrichtung der Erntemaschine ausgerichtet, wobei die Anschlussseite sowohl zu einer dem Schrägförderer abgewandten Seite als auch nach vorne ausgerichtet ist. Eine derartige Ausrichtung des Kupplungsteils ist besonders vorteilhaft, da das Kupplungsteil für einen Bediener komfortabel zugänglich ist und zugleich die Leitungen, die mittels eines vorsatzgerätseitigen Kupplungsteils an den Kupplungsteil angeschlossen werden, von der Seitenwand des Schrägförderers weg gerichtet sind, sodass diese nicht in Berührung mit dem Schrägförderer stehen. Weiterhin hat sich gezeigt, dass bei einer derartige Ausrichtung keine Kollisionen des Kupplungsteils mit Maschinenteilen beim Verschwenken des Schrägförderers auftreten. Zusätzlich wird das Ein- und Ausklappen einer benachbart zu dem Kupplungsteil angeordnete Aufstiegsleiter weder durch das Kupplungsteil noch durch die mit dem Kupplungsteil zu verbindenden Leitungen eines Vorsatzgeräts beeinträchtigt. Die ortsfeste Anbindung an dem Schrägförderer bietet den besonderen Vorteil, dass die Länge der Leitungen, die von der Erntemaschine zu dem Kupplungsteil führen, nicht an verschiedene Vorsatztypen anzupassen ist. Vielmehr kann ein an dem Vorsatzgerät vorgesehenes Losteil, das komplementär zu dem Kupplungsteil der Erntemaschine ausgebildet ist, zum Verbinden mit dem Kupplungsteil mit einer für den Vorsatztyp optimal angepassten Länge der Leitungen ausgestattet sein.

Eine vorteilhafte Weiterbildung sieht vor, dass das Kupplungsteil eine Mehrzahl von Anschlüssen, vorzugsweise Kupplungsmuffen, für Druckmittelleitungen und elektrische Anschlussverbindungen aufweist.

Eine weitere vorteilhafte Weiterbildung sieht vor, dass ein Befestigungsrahmen außenseitig an dem Schrägförderergehäuse angeordnet ist, wobei der Befestigungsrahmen das Kupplungsteil haltert, sodass das Kupplungsteil zusammen mit dem Befestigungsrahmen auf einfache Art und Weise montiert und demontiert werden können. Insbesondere kann der Befestigungsrahmen einen Leitungsführungsabschnitt aufweisen, der Druckmittelleitungen und/oder elektrische Leitungen der Erntemaschine abschnittsweise außenseitig entlang des Schrägförderers führt. Eine außenseitige Anbindung des Kupplungsteils sowie die außenseitige Führung der Leitungen entlang des Schrägförderergehäuses an dem Schrägförderer hat den besonderen Vorteil, dass kein Bauraum innerhalb des Schrägförderers für die Leitungen sowie das Kupplungsteil benötigt wird und somit der Bauraum für Antriebskomponenten, wie etwa Riemen und Getriebeeinheiten zur Verfügung steht.

Gemäß einer vorteilhaften Ausgestaltung kann der Leitungsführungsabschnitt ein von der Seitenwand abweisendes, der Erntemaschine zugewandtes Ende aufweisen, sodass ausgehend von dem Ende der Abstand der Druckmittelleitungen und/oder elektrische Leitungen zu der Seitenwand hin zu einem der Erntemaschine zugewandten Bereich des Schrägförderers zumindest abschnittsweise stetig zunimmt. Hierfür kann ein Endbereich des Leitungsführungsabschnitts einen in Richtung des Mähdreschers zunehmenden Abstand von der Seitenwand des Schrägförderers aufweisen. Ausgehend von dem Ende des Leitungsführungsabschnitts nimmt der Abstand der Leitungen zu der Seitenwand in Richtung des Mähdreschers zunächst zu. Der Leitungsführungsabschnitt bewirkt somit, dass die Leitungen beabstandet von der Seitenwand geführt werden, sodass Schmutzansammlungen begünstigende enge Zwischenräume zwischen den Leitungen und der Seitenwand vermieden werden.

Gemäß einer weiteren vorteilhaften Ausgestaltung kann der Befestigungsrahmen ein sich abschnittsweise entlang der Seitenwand des Schrägförderers erstreckendes Profilelement umfassen, wobei ausgehend von dem Profilelement sich beabstandet zueinander ein erster Steg und ein zweiter Steg weg von der Seitenwand erstrecken, die an ihrem jeweiligen den Profilelement abgewandten Ende miteinander verbunden sind. Insbesondere können der erste Steg und der zweite Steg den Leitungsführungsabschnitt ausbilden und der erste und zweite Steg hin zu dem Schrägförderergehäuse geneigt sein. Hierdurch kann ein Befestigungsrahmen geschaffen werden, der sowohl einen Leitungsführungsabschnitt ausbildet und das Kupplungsteil haltert und zugleich einen geringen Bauraumbedarf und geringes Eigengewicht aufweist.

Eine weitere vorteilhafte Ausgestaltung sieht vor, dass an einen der Erntemaschine abgewandten Ende des Befestigungsrahmens ein dritter Steg angeordnet ist, der sich im Wesentlichen orthogonal von dem Schrägförderergehäuse nach oben erstreckt, wobei der dritte Steg obenseitig eine vorzugsweise schlitzförmige Aussparung aufweist. Bei einer Demontage des Schrägförderers kann die schlitzförmige Aussparung zum Aufhängen des Befestigungsrahmens mit dem daran angeordneten Kupplungsteil und der Leitungen verwendet werden, indem beispielsweise eine Schnur oder ein Kabelbinder durch die Aussparung gefädelt und an dem Mähdreschergehäuse oder einem daran angeordneten Element befestigt wird.

Vorzugsweise kann die selbstfahrende Erntemaschine eine insbesondere klappbare Aufstiegsleiter umfassen, wobei das Kupplungsteil benachbart zu der Aufstiegsleiter angeordnet ist.

Gemäß einer weiteren vorteilhaften Ausgestaltung kann das Kupplungsteil, der Befestigungsrahmen, die Druckmittelleitungen und die elektrischen Leitungen als eine modulare Montagebaugruppe ausgebildet sein, sodass diese als vorgefertigter Montagebausatz an den Mähdrescher montierbar sind. Hierbei können die Leitungen in besonders bevorzugter Weise mit dem Kupplungsteil verbunden und die Verbindungsstellen vor einer Endmontage überprüft werden.

Die vorliegende Erfindung wird nachstehend anhand eines in den Zeichnungen dargestellten Ausführungsbeispiels näher erläutert. Es zeigen:
- Figur 1: eine schematische und exemplarische Darstellung eines selbstfahrenden Mähdreschers in Seitenansicht;
- Figur 2: schematisch und exemplarisch eine Multikupplungsvorrichtung mit einem ortsfest an dem Schrägförderer eines Mähdreschers angeordneten Kupplungsteil;
- Figur 3: schematisch und exemplarisch eine perspektivische Ansicht des Kupplungsteils gemäß Figur 2;

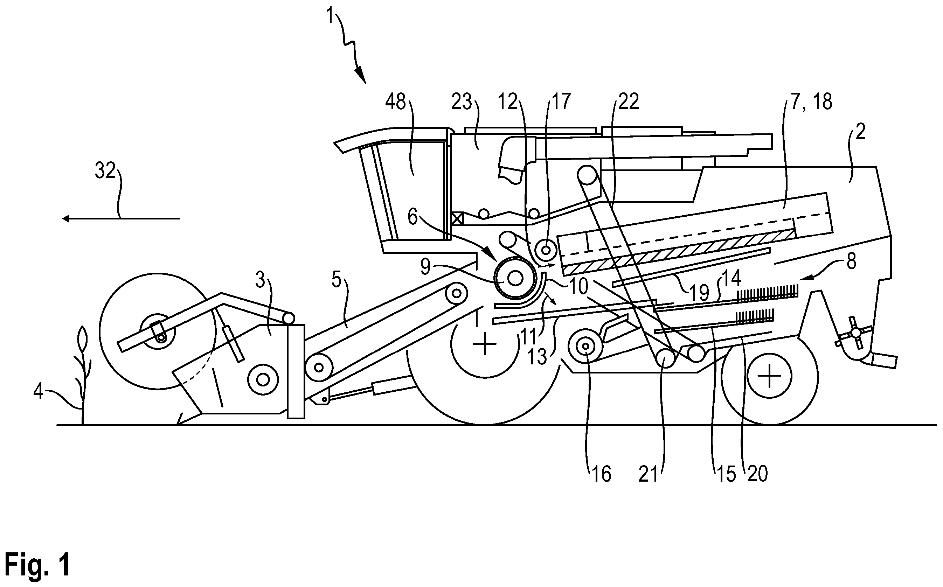

Fig. 1 zeigt eine schematische Darstellung einer als selbstfahrender Mähdrescher 1 ausgeführten Erntemaschine in Seitenansicht. Der Mähdrescher 1 weist ein mit einem Fahrwerk verbundenes Traggestell auf, auf dem ein mehrteiliges Maschinengehäuse 2 befestigt ist. Der Mähdrescher 1 nimmt mit einem Vorsatzgerät 3 in an sich bekannter Weise Erntegut 4 von einem Feld auf.

Das aufgenommene Erntegut 4 wird über einen schwenkbeweglich an dem Maschinengehäuse 2 angeordneten Schrägförderer 5 einer Dresch- und Trenneinrichtung übergeben. Die Dresch- und Trenneinrichtung umfasst eine nach dem Tangentialflussprinzip arbeitende Dreschvorrichtung 6, eine der Dreschvorrichtung 6 nachgeordnete Abscheideeinrichtung 7 und eine Siebanordnung 8 als Teil einer Reinigungsvorrichtung des Mähdreschers 1.

In der Dreschvorrichtung 6 wird das Erntegut 4 zwischen zumindest einer Dreschtrommel 9 und einem diese wenigstens teilweise ummantelnden Dreschkorb 10 hindurchgeführt und in zumindest zwei Teilströme 11, 12 getrennt. Der erste Teilstrom 11 besteht im Wesentlichen aus Körnern, Kurzstroh und Spreu und wird über einen Vorbereitungsboden 13 der aus einem Obersieb 14 und einem Untersieb 15 bestehenden Siebanordnung 8 zugeführt. Ein Reinigungsgebläse 16 generiert einen Luftstrom, welcher die Siebe 14, 15 durchsetzt.

Der im rückwärtigen Bereich der Dreschvorrichtung 6 aus diesem austretende weitere, im Wesentlichen aus Halmgut, insbesondere Stroh und einem Restkornanteil bestehende zweite Teilstrom 12 wird mittels einer Zuführtrommel 17 zu der als Axialrotor ausgeführten Abscheideeinrichtung 7 geleitet. In einer alternativen Ausführungsform kann die Abscheideeinrichtung 7 auch als Hordenschüttleranordnung ausgeführt sein. Ein im Wesentlichen aus einem Gemisch aus Körnern und Ährenbruchstücken sowie Kurzstroh bestehender Erntegutstrom wird von der Abscheideeinrichtung 7 abgeschieden und über einen sogenannten Rücklaufboden 19 und den Vorbereitungsboden 13 an die Siebanordnung 8 übergeben.

In der Siebanordnung 8 wird schließlich in an sich bekannter Weise ein gereinigter Körnerstrom 18 abgeschieden und über einen Auffang- und Führungsboden 20 einer Kornförderschnecke 21 zugeführt, von wo aus er mittels eines Elevators 22 in den Korntank 23 gefördert wird.

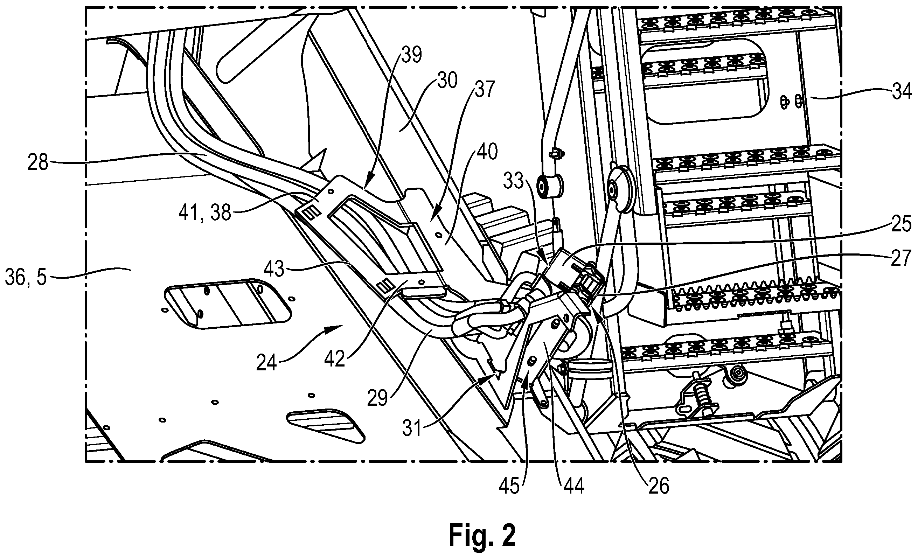

In Fig. 2 ist schematisch und exemplarisch eine Multikupplungsvorrichtung 24 dargestellt. Die Multikupplungsvorrichtung 24 umfasst ein ortsfest an dem Schrägförderer 5 angeordnetes Kupplungsteil 25. Die Anschlussseite 26 des Kupplungsteils 25 ist in der in Fig. 2 dargestellten Ansicht durch einen Deckel 27 verschlossen. Mittels der Multikupplungsvorrichtung 24 kann ein Vorsatzgerät 3 gleichzeitig mit Druckmittelleitungen 28 und/oder elektrischen Leitungen 29 des Mähdreschers 1 verbunden werden, wodurch sich die Kupplungszeit verringert.

Das Kupplungsteil 25 ist an der Seitenwand 30 des Schrägförderers 5 mittels eines Befestigungsrahmens 31 angeordnet. Hierbei ist die Anschlussseite 26 zur Seite und schräg nach vorne ausgerichtet. Mit anderen Worten ist die Anschlussseite 26 schräg zur Längsrichtung 32 des Mähdreschers 1 ausgerichtet, wobei die Anschlussseite 26 dem Schrägförderer 5 abgewandt und eine Rückseite 33 des Kupplungsteils 25 dem Schrägförderer 5 zugewandt ist. Eine derartige Ausrichtung des Kupplungsteils 25 ist besonders vorteilhaft, da das Kupplungsteil für einen Bediener komfortabel zugänglich ist und zugleich die Leitungen, die mittels eines vorsatzgerätseitigen Kupplungsteils an den Kupplungsteil 25 angeschlossen werden, von der Seitenwand 30 des Schrägförderers weg gerichtet sind, sodass diese nicht in Berührung mit dem Schrägförderer 5 stehen. Hier und vorzugsweise ist die Multikupplungsvorrichtung 24 benachbart zu einer kappbaren Aufstiegsleiter 34 des Mähdreschers 1 angeordnet. Es hat sich gezeigt, dass die erfindungsgemäße Ausrichtung des Kupplungsteils 25 auch im gekoppelten Zustand mit einem hier nicht näher dargestellten vorsatzgerätseitigen Kupplungsteil, sowohl eine Schwenkbewegung des Schrägförderers 5 als auch ein Einklappen und Ausklappen der Aufstiegsleiter 34 zulässt, ohne dass eine Kollision mit den zu verbindenden Leitungen oder den Kupplungsteilen auftritt.

Der außenseitig an dem Schrägförderergehäuse 36 angeordnete Befestigungsrahmen 31 umfasst einen Leitungsführungsabschnitt 37, der die Druckmittelleitungen 28 und elektrische Leitungen 29 des Mähdreschers 1 außenseitig entlang des Schrägförderers 5 führt. Der Leitungsführungsabschnitt 37 umfasst ein dem Mähdrescher 1 zugewandtes Ende 38, das derart ausgerichtet ist, sodass es die aus dem Leitungsführungsabschnitt 37 austretenden Leitungen 28, 29 von der Seitenwand 30 abweist. Hierfür weist ein Endbereich 39 des Leitungsführungsabschnitts 37 einen in Richtung des Mähdreschers 1 zunehmenden Abstand von der Seitenwand 30 auf. Ausgehend von dem Ende 38 des Leitungsführungsabschnitts 37 nimmt der Abstand der Leitungen 28, 29 zu der Seitenwand in Richtung des Mähdreschers 1 zunächst zu. Der Leitungsführungsabschnitt 37 bewirkt, dass die Leitungen 28, 29 beabstandet von der Seitenwand 30 geführt werden, sodass Schmutzansammlungen begünstigende enge Zwischenräume zwischen den Leitungen 28, 29 und der Seitenwand 30 vermieden werden.

Hier und vorzugsweise umfasst der Befestigungsrahmen 31 ein sich entlang der Seitenwand 30 des Schrägförderers 5 erstreckendes Profilelement 40, wobei ausgehend von dem Profilelement 40 sich beabstandet zueinander ein erster Steg 41 und ein zweiter Steg 42 weg von der Seitenwand 30 erstrecken, die an ihrem jeweiligen den Profilelement 40 abgewandten Ende mittels einer sich im Wesentlichen in Längsrichtung des Mähdreschers 1 erstreckenden Strebe 43 miteinander verbunden sind. Der erste und der zweite Steg 41, 42 sind ausgehend von dem Profilelement 40 hin zu dem Schrägförderergehäuse 36 geneigt ausgeführt, sodass Verunreinigungen auf den Stegen 41, 42 herabrutschen können. Weiterhin wird durch die geneigte Anordnung der Stege 41, 42 zugleich den Leitungen 28, 29 ein bevorzugtes Höhenprofil aufgeprägt. Der erste und zweite Steg 41, 42 bilden zusammen mit der Strebe 43 den Leitungsführungsabschnitt 37.

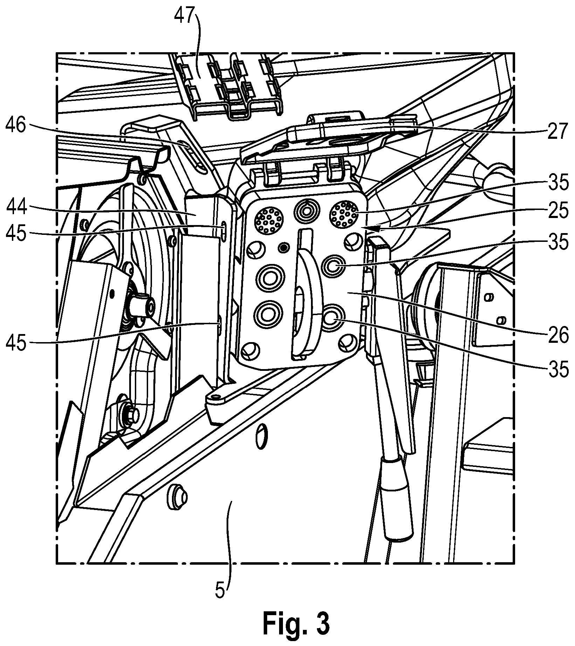

Ein weiterer dritter Steg 44 erstreckt sich an einen dem Mähdrescher 1 abgewandten, vorderen Ende 45 des Befestigungsrahmens 31 im Wesentlichen orthogonal von dem Schrägförderergehäuse 36 nach oben. Der in Fig. 3 näher dargestellte dritte Steg 44 umfasst Aussparungen 45, die zum lösbaren Verbinden des Kupplungsteils 25 mittels einer nicht näher dargestellten Schraubverbindung vorgesehen sind. Weiterhin umfasst der dritte Steg 44 an seinem dem Schrägförderergehäuse 36 abgewandten, oberen Ende eine weitere schlitzförmige Aussparung 46. Die schlitzförmige Aussparung 46 befindet sich in einer angehobenen Position des Schrägförderers 5 benachbart zu einer Trittstufe 47, die vorzugsweise einen Teil der zu der Kabine 48 führenden Aufstiegsleiter 34 bildet. Mithin kann bei einer Demontage des Schrägförderers 5 der Befestigungsrahmen 31 mitsamt des Kupplungsteils 25 sowie der Leitungen 28, 29 an der Trittstufe 47 beispielsweise mittels eines Kabelbinders angebunden werden, sodass die Demontage des Schrägförderers 5 erheblich vereinfacht wird. Weiterhin ist in Fig. 3 die Anschlussseite 26 mit geöffneten Deckel 27 dargestellt. Die Anschlussseite 26 umfasst eine Mehrzahl von Anschlüssen 35, die als Kupplungsmuffen zum Verbinden von elektrischen und hydraulischen Leitungen ausgebildet sind.

Hier und vorzugsweise sind das Kupplungsteil 25, der Befestigungsrahmen 31 und die Druckmittelleitungen 28, 29 als eine modulare Montagebaugruppe ausgebildet, sodass diese als vorgefertigter Montagebausatz an den Mähdrescher 1 montierbar sind. Hierbei können die Leitungen 28, 29 in besonders bevorzugter Weise mit dem Kupplungsteil 25 verbunden und die Verbindungsstellen vor einer Endmontage überprüft werden.

### Bezugszeichenliste:

| | | | |
|---|---|---|---|
| 1 | Mähdrescher | 34 | Aufstiegsleiter |
| 2 | Maschinengehäuse | 35 | Anschluss |
| 3 | Vorsatzgerät | 36 | Schrägfördergehäuse |
| 4 | Erntegut | 37 | Leitungsführungsabschnitt |
| 5 | Schrägförderer | 38 | Ende Befestigungsrahmen |
| 6 | Dreschvorrichtung | 39 | Endbereich |
| 7 | Abscheideeinrichtung | 40 | Profilelement |
| 8 | Siebanordnung | 41 | Erster Steg |
| 9 | Dreschtrommel | 42 | Zweiter Steg |
| 10 | Dreschkorb | 43 | Strebe |
| 11 | Teilstrom | 44 | Dritter Steg |
| 12 | Teilstrom | 45 | Aussparung |
| 13 | Vorbereitungsboden | 46 | Aussparung |
| 14 | Obersieb | 47 | Trittstufe |
| 15 | Untersieb | 48 | Kabine |
| 16 | Reinigungsgebläse | | |
| 17 | Zuführtrommel | | |
| 18 | Körnerstrom | | |
| 19 | Rücklaufboden | | |
| 20 | Auffang- und Führungsboden | | |
| 21 | Kornförderschnecke | | |
| 22 | Elevator | | |
| 23 | Korntank | | |
| 24 | Multikupplungsvorrichtung | | |
| 25 | Kupplungsteil | | |
| 26 | Anschlussseite | | |
| 27 | Deckel | | |
| 28 | Druckmittelleitung | | |
| 29 | Elektrische Leitung | | |
| 30 | Seitenwand | | |
| 31 | Befestigungsrahmen | | |
| 32 | Längsrichtung | | |
| 33 | Rückseite | | |

## Patentansprüche

1. Selbstfahrender Erntemaschine, vorzugsweise ein Mähdrescher (1), mit einem Maschinengehäuse (2) und einem schwenkbeweglich an dem Maschinengehäuse (2) angeordneten Schrägförderer (5), wobei an dem Schrägförderer (5) eine Multikupplungsvorrichtung (24) angeordnet ist,
**dadurch gekennzeichnet, dass**
die Multikupplungsvorrichtung (24) ein ortsfest an dem Schrägförderer (5) angeordnetes Kupplungsteil (25) umfasst, wobei eine Anschlussseite (26) des Kupplungsteils (25) zur Seite und schräg nach vorne ausgerichtet ist.

2. Selbstfahrender Erntemaschine nach Anspruch 1, **dadurch gekennzeichnet, dass** das Kupplungsteil (25) eine Mehrzahl von Anschlüssen (35), vorzugsweise Kupplungsmuffen für Druckmittelleitungen und elektrische Anschlussverbindungen aufweist.

3. Selbstfahrender Erntemaschine nach einem der Ansprüche 1 oder 2, **dadurch gekennzeichnet, dass** ein Befestigungsrahmen (31) außenseitig an dem Schrägförderergehäuse (36) angeordnet ist, wobei der Befestigungsrahmen (31) das Kupplungsteil (25) haltert.

4. Selbstfahrender Erntemaschine nach Anspruch 3, **dadurch gekennzeichnet, dass** der Befestigungsrahmen (31) einen Leitungsführungsabschnitt (37) aufweist, der Druckmittelleitungen (28) und/oder elektrische Leitungen (29) der Erntemaschine abschnittsweise außenseitig entlang des Schrägförderers (5) führt.

5. Selbstfahrender Erntemaschine nach Anspruch 4, **dadurch gekennzeichnet, dass** der Leitungsführungsabschnitt (37) ein von der Seitenwand (30) abweisendes, der Erntemaschine zugewandtes Ende (38) aufweist, sodass ausgehend von dem Ende (38) der Abstand der Druckmittelleitungen (28) und/oder elektrische Leitungen (29) zu der Seitenwand (30) hin zu einem der Erntemaschine zugewandten Bereich des Schrägförderers (5) zumindest abschnittsweise stetig zunimmt.

6. Selbstfahrender Erntemaschine nach einem der Ansprüche 3 bis 5, **dadurch gekennzeichnet, dass** der Befestigungsrahmen (31) ein sich abschnittsweise entlang der Seitenwand (30) des Schrägförderers (5) erstreckendes Profilelement (40) umfasst, wobei ausgehend von dem Profilelement (40) sich beabstandet zueinander ein erster Steg (41) und ein zweiter Steg (42) weg von der Seitenwand (30) erstrecken, die an ihrem jeweiligen den Profilelement (40) abgewandten Ende miteinander verbunden sind.

7. Selbstfahrender Erntemaschine nach Anspruch 6, **dadurch gekennzeichnet, dass** der erste Steg (41) und der zweite Steg (42) den Leitungsführungsabschnitt (37) ausbilden und der erste und zweite Steg (41, 42) hin zu dem Schrägförderergehäuse (5) geneigt sind.

8. Selbstfahrender Erntemaschine nach einem der Ansprüche 3 bis 7, **dadurch gekennzeichnet, dass** an einen der Erntemaschine abgewandten Ende des Befestigungsrahmens (31) ein dritter Steg (44) angeordnet ist, der sich im Wesentlichen orthogonal von dem Schrägförderergehäuse (36) nach oben erstreckt, wobei der dritte Steg (44) obenseitig eine vorzugsweise schlitzförmige Aussparung (46) aufweist.

9. Selbstfahrender Erntemaschine nach Anspruch 1 bis 8, **dadurch gekennzeichnet, dass** die selbstfahrende Erntemaschine eine insbesondere klappbare Aufstiegsleiter (34) umfasst, wobei das Kupplungsteil (25) benachbart zu der Aufstiegsleiter (34) angeordnet ist.

10. Selbstfahrender Erntemaschine einem der Ansprüche 1 bis 9, **dadurch gekennzeichnet, dass** das Kupplungsteil (25), der Befestigungsrahmen (31), die Druckmittelleitungen (28) und die elektrischen Leitungen (29) als eine modulare Montagebaugruppe ausgebildet sind.
